(19) Europäisches Patentamt
European Patent Office
Office européen des brevets

(11) **EP 0 953 503 B1**

(12) **EUROPÄISCHE PATENTSCHRIFT**

(45) Veröffentlichungstag und Bekanntmachung des Hinweises auf die Patenterteilung:
**27.08.2003 Patentblatt 2003/35**

(51) Int Cl.⁷: **B64C 13/16**, G05D 1/02, B64C 9/12

(21) Anmeldenummer: **99105621.9**

(22) Anmeldetag: **19.03.1999**

(54) **Verfahren zur Reduktion von an einem Flugzeug auftretenden Böenlasten**

Method for reducing the loads on an aircraft due to gusts

Procédé pour la réduction des charges sur un aéronef à cause des rafales

(84) Benannte Vertragsstaaten:
**DE ES FR GB IT**

(30) Priorität: **30.04.1998 DE 19819341**

(43) Veröffentlichungstag der Anmeldung:
**03.11.1999 Patentblatt 1999/44**

(73) Patentinhaber: **Airbus Deutschland GmbH**
**21129 Hamburg (DE)**

(72) Erfinder:
• **Kelm, Roland Dr.-Ing.**
**20259 Hamburg (DE)**

• **Grabietz, Michael Dipl.-Ing.**
**57392 Schmallenberg (DE)**

(74) Vertreter: **Hansmann, Dierk, Dipl.-Ing.**
**Patentanwälte**
**Hansmann-Klickow-Hansmann**
**Jessenstrasse 4**
**22767 Hamburg (DE)**

(56) Entgegenhaltungen:
**US-A- 4 591 113      US-A- 4 796 192**
**US-A- 5 082 207**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Reduktion von an einem Flugzeug auftretenden Böenlasten unter Verwendung von Stellgliedern, die den auftretenden Böenlasten durch eine Verstellung entgegenwirken, insbesondere von Querrudern, Klappen an Innenflügeln oderdergleichen, wobei sich die gesamte Böenlast aus der Summe der 1g-Basislast und der Zusatzlast durch eine auftretende Böe ergibt, und wobei die Stellglieder in Abhängigkeit von der Flughöhe, der Fluggeschwindigkeit und von dem Fluggewicht verstellt werden.

Bei den an einem Flugzeug während des Fluges auftretenden Lasten wird unter anderem zwischen Manöver- und Böenlasten unterschieden. Verglichen mit den Manöverlasten zeichnen sich die Böenlasten dadurch aus, daß sie plötzlichen zeitlichen Änderungen unterliegen können. Dies rührt daher, daß bei hohen Fluggeschwindigkeiten die durch eine Böe induzierte Anstellwinkeländerung der Flugzeugflügel sehr schnell erfolgt. Dagegen werden Manöverlaständerungen z.B. durch Steuerflächenausschläge sowie durch Fluglageänderungen hervorgerufen (z.B. Manöverlastfall mit einem Übergang von 1g auf 2,5g). Diese Laständerungen erfolgen verhältnismäßig langsam.

Ein System zur Abminderung von Manöverlasten wird bereits beim Airbus A340 erfolgreich eingesetzt. Mit diesem System konnten die Manöverlasten bis auf das Niveau der maximalen Böenlasten abgesenkt werden, was vorteilhafterweise zu einer Gewichtsreduktion der Flügel führte.

Dagegen konnten sich Systeme zur Böenlastabminderung aufgrund von sehr hohen Systemanforderungen nicht durchsetzen. Trifft ein Flugzeug auf eine Böe, so werden zusätzliche Lasten induziert, wobei sich die Gesamtlast aus der 1g-Basislast und der Zusatzlast durch die Böe ergibt:

$$\text{Gesamte Böenlast = 1g-Basislast} + \measuredangle\text{Last infolge Böe}$$

Die für Flugzeugflügel dominierenden Böenlasten resultieren i.a. aus vertikalen Böen, wobei sich die größten vertikalen Böenlasten in Flughöhen unterhalb der Reiseflughöhe ergeben. Durch entsprechende Berechnungsverfahren läßt sich ableiten, daß auch die größten Böenlasten in Flughöhen unterhalb der Reiseflughöhe auftreten.

Ein bekanntes Böenabminderungssystem wird im Airbus A320 verwendet. Fliegt eine A320 in eine Böe ein und wird dadurch eine bestimmte Vertikalbeschleunigung hervorgerufen, so werden die Querruder symmetrisch nach oben ausgeschlagen (bei einer Böe von unten). Dadurch wird der durch den induzierten Zusatzanstellwinkel erhöhte Auftrieb im Außenflügel reduziert. Bei diesem Verfahren wird also in dem Moment, in dem eine Böe auftritt, die durch sie erzeugte Zusatzlast reduziert. Dies führt zu einer Reduktion der maximalen Biegemomente. Da die durch die Böen induzierten Zusatzlasten große zeitliche Gradienten aufweisen, sind zur Durchführung des Verfahrens allerdings sehr hohe Ruderstellgeschwindigkeiten erforderlich,(woraus aufgrund des erhöhten Systemaufwandes nachteiligerweise auch Gewichtserhöhungen folgen. Ein ähnliches Verfahren ist aus US-A-4 796 192 bekannt.

Der Erfindung liegt daher die Aufgabe zugrunde, ein Verfahren der eingangs genannten Art vorzuschlagen, durch welches die bisher erforderlichen hohen Verstellgeschwindigkeiten der Stellglieder vermieden werden.

Diese Aufgabe wird erfindungsgemäß dadurch gelöst, daß eine Verstellung der Stellglieder im Steigflug bis zum Erreichen der Reiseflughöhe des Flugzeuges bzw. im Sinkflug bis zur Landung des Flugzeuges derart durchgeführt wird, daß eine Veränderung der Flügelauftriebsverteilung in Spannweitenrichtung erfolgt und die resultierende gesamte Böenlast durch Reduktion der 1g-Basislast vermindert wird.

Ein Vorteil der Erfindung ist darin zu sehen, daß im Gegensatz zu dem eingangs beschriebenen Verfahren ein Ausschlag der Verstellglieder unabhängig davon erfolgt, ob tatsächlich eine Böe vorhanden ist und somit auf das Flugzeug auftrifft oder nicht. Da der während des Steig- bzw. des Sinkfluges erforderliche Ruderausschlag im wesentlichen nur von der Flughöhe, der Fluggeschwindigkeit und von dem Fluggewicht abhängig ist, sind vorteilhafterweise keine höheren Klappenverstellgeschwindigkeiten als bei den bereits eingesetzten Manöverlastabminderungssystemen notwendig. Weiterhin ist es infolge der maximalen Böenlasten, die nur in Flughöhen unterhalb der Reiseflughöhe auftreten, von Vorteil, daß eine Böenlastabminderung bis auf das Böenlastniveau in Reiseflughöhe ermöglicht wird. Beim Erreichen der Reiseflughöhe sollte kein Ausschlag der Stellglieder mehr erfolgen, um den aerodynamischen Widerstand klein zu halten.

Weitere Ausgestaltungen der Erfindung bestehen darin, daß

- durch eine Steuerung der Ausschläge der Stellglieder während des Steig- bzw. Sinkfluges die 1g-Auftriebsverteilung optimiert und der aerodynamische Zusatzwiderstand minimiert wird,
- zur Verstellung der Stellglieder Querruder symmetrisch nach oben und/oder an den Innenflügeln angeordnete Klappen nach unten ausgeschlagen werden, und daß
- durch eine Anwendung für adaptive Flügel bzw. für Flügel mit einer variablen Wölbung eine sehr effektive Steuerung der Auftriebsverteilung möglich ist.

Durch die erfindungsgemäße Reduktion der Böenlasten wird in vorteilhafter Weise eine Gewichtsverringerung des Flugzeuges ermöglicht, wodurch Fertigungskosten und der Treibstoffverbrauch vermindert werden. Dieser Vorteil dominiert insbesondere bei Langstreckenflugzeugen gegenüber der Erhöhung des aerodynamischen Widerstandes während des Steig- bzw. Sinkfluges.

Von Vorteil ist weiterhin, daß neben einer Reduzierung der maximal auftretenden Böenlasten auch gleichzeitig die Fatiguelasten während des Steig- bzw. Sinkfluges des Flugzeuges vermindert werden. Somit sind vorteilhafterweise bei der resultierenden Flügelgewichtseinsparung sowohl die nach Ultimate-Lasten (z.B. Flügeloberschale) als auch die nach Fatiguelasten (z.B. Flügelunterschale) dimensionierten Bauteile betroffen.

Die Erfindung ist vorteilhafterweise auch für bereits bestehende Flugzeuge einsetzbar, bei denen ein symmetrisches Ausschlagen der Querruder möglich ist. Dieses sind i.a. Flugzeuge mit einer "fly by wire"-Flugsteuerung. Da hierbei alle notwendigen Systeme bereits vorhanden sind, ergeben sich somit auch keine Zusatzkosten.

Ein weiterer Vorteil der Erfindung ist darin zu sehen, daß bei der praktischen Umsetzung der Erfindung keine Zulassungsprobleme zu erwarten sind, da das System physikalisch vergleichbar ist mit bereits im Einsatz befindlichen Manöverlastabminderungssystemen. Selbst bei Ausfall des Systems ist kein Sicherheitsrisiko vorhanden, da dann lediglich eine Reduktion der Fluggeschwindigkeit zur Begrenzung der Böenlasten notwendig wird. Vorteilhafterweise hat der Einsatz eines derartigen Systems somit keine negativen Auswirkungen auf die Sicherheit und Manövrierfähigkeit eines Flugzeuges.

Weitere Ausgestaltungen der Erfindung sind darin zu sehen, daß als Stellglieder aktive oder passive Systeme zur Veränderung der Flügelauftriebsverteilung vorgesehen werden können. Dieses Systeme sind unabhängig davon, ob die Ansteuerung mechanisch, hydraulisch, elektrisch, pneumatisch oder auf anderem Wege realisiert wird.

Die 1g-Basislast ist diejenige Last, die dem augenblicklichen Gewicht entspricht. Diese Last entsteht, wenn das Gewicht des Flugzeuges durch den Auftrieb an der Tragfläche kompensiert wird. Wird nun - wie bei der Erfindung vorgesehen - der Auftrieb an der Tragfläche durch eine "Reduktion der 1g-Basis-Last" verkleinert, dann wird das Flugzeug dadurch in der Höhe gehalten, daß das Gewicht des Flugzeuges durch eine entsprechende Erhöhung des Anstellwinkels kompensiert wird. Mit der Bezeichnung "Reduktion der 1g-Basislast" ist somit gemeint, daß der Biegemomentenverlauf über die Spannweite der Tragfläche geändert werden soll. Diesem Sachverhalt trägt das die "Veränderung der Flügelauftriebsverteilung" betreffende erfinderische Merkmal Rechnung.

Im Gegensatz hierzu ist es bei den vorbekannten Gegenständen erforderlich, daß die Klappenausschläge jeweils genau in den Momenten erfolgen, in denen Böen oder Zusatzlasten zusätzlich auftreten. Die hierfür notwendige Steuerung erfordert Sensoren, die eine Böe oder Zusatzlast meßtechnisch detektieren. Hierfür sind z. B. Beschleunigungsmesser vorgesehen, die bei bestimmten Vertikalbeschleunigungen die Klappenausschläge aktivieren. Dies erfordert infolge der notwendigen sehr schnellen Klappenausschläge einen aufwendigen Systemaufwand (aufwendiges Regel-/Sensorensystem), da die Böen oder Zusatzlasten bereits vor der Einleitung von Regelvorgängen wirksam sind. Diese, den vorbekannten Systemen anhaftenden Nachteile entfallen bei dem erfindungsgemäßen Verfahren. Es ist weder ein zusätzliches Sensorsystem erforderlich, noch bedarf das Klappensystem einer Modifikation, da schnelle Klappenausschläge nicht notwendig sind. Die beim erfindungsgemäßen Verfahren durchgeführten Klappenausschläge erfolgen präventiv und nicht erst in dem Moment, in dem eine Böe oder eine Zusatzlast auftritt.

Beim Anmeldungsgegenstand wird von den Erkenntnissen ausgegangen, daß die für ein Flugzeug kritischen und damit für die Flugzeugstruktur häufig dimensionierenden Böenlasten sich in Flughöhen unterhalb der Reiseflughöhe finden, und daß sich durch Reduktion dieser kritischen Lasten die Gesamtbelastung des Flügels begrenzen läßt. Durch geeignete Klappenausschläge im Steig- bzw. Sinkflug unterhalb der Reiseflughöhe wird die Auftriebsverteilung des Flügels (in Spannweitenrichtung) verändert wird. Diese Veränderung erfolgt in einer Weise, daß das Flügelbiegemoment reduziert wird. Auftrieb wird dabei im Außenflügel tendenziell reduziert und im Innenflügel erhöht. Der Gesamtauftrieb bleibt hierbei unverändert, er entspricht weiterhin dem Gewicht des Flugzeuges.

Die erforderlichen Klappenausschläge hängen lediglich von bestimmten Flugparametern ab, wie beispielsweise Flughöhe, Geschwindigkeit oder Flugzeuggewicht. Es ist dabei völlig unbedeutend, ob tatsächlich eine kritische Böe auftritt oder nicht. Falls sie auftritt, ist die resultierende Biegemomentenbelastung des Flügels reduziert. Die resultierende Biegemomentenbelastung ergibt sich hierbei aus der 1g-Grundlast (die durch entsprechende Klappenausschläge modifiziert wurde) und der überlagerten Zusatzlast infolge der Böe.

**Patentansprüche**

1.  Verfahren zur Reduktion von an einem Flugzeug auftretenden Böenlasten unter Verwendung von Stellgliedern, die den auftretenden Böenlasten durch eine Verstellung entgegenwirken, insbesondere von Querrudern, Klappen an Innenflügeln oderdergleichen, wobei sich die gesamte Böenlast aus der Summe der 1g-Basislast und der Zusatzlast durch eine auftretende Böe ergibt, und wobei die Stellglieder in Abhängigkeit von der Flughöhe, der Fluggeschwindigkeit und von dem Fluggewicht verstellt werden, **dadurch gekennzeichnet, daß** eine Verstellung der Stellglieder im Steigflug bis zum Erreichen der Reiseflughöhe des Flugzeuges bzw. im Sinkflug bis zur Landung des Flugzeuges derart durchgeführt wird, daß eine Veränderung der Flügelauftriebsverteilung in Spannweitenrichtung erfolgt und die resultierende gesamte Böenlast durch Reduktion der 1g-Basislast vermindert wird.

2. Verfahren nach Anspruch 1, **dadurch gekennzeichnet, daß** durch eine Steuerung der Ausschläge der Stellglieder während des Steig- bzw. Sinkfluges die lg-Auftriebsverteilung optimiert und der aerodynamische Zusatzwiderstand minimiert wird.

3. Verfahren nach Anspruch 1 oder 2, **dadurch gekennzeichnet, daß** als Stellglied ein aktives System zur Veränderung der Flügelauftriebsverteilung vorgesehen ist.

4. Verfahren nach Anspruch 1, 2 oder 3, **dadurch gekennzeichnet daß** zur Verstellung der Stellglieder Querruder symmetrisch nach oben und/oder an den Innenflügeln angeordnete Klappen nach unten ausgeschlagen werden.

5. Verfahren nach Anspruch 1 oder 2, **dadurch gekennzeichnet, daß** als Stellglied ein passives System zur Veränderung der Flügelauftriebsverteilung vorgesehen ist.

6. Verfahren nach Anspruch 1, 2, 3, 4 oder 5, **gekennzeichnet durch** eine Anwendung für adaptive Flügel.

7. Verfahren nach Anspruch 1, 2, 3, 4 oder 5, **gekennzeichnet durch** eine Anwendung für Flügel mit einer variablen Wölbung.

## Claims

1. Method of reducing gust loads occurring in an aircraft by the use of final control elements which counteract the gust loads that occur by an adjustment, in particular of ailerons, flaps on inner wings or the like, wherein the total gust load results from the sum of the 1g base load and the additional load due to a gust that occurs, and wherein the final control elements are adjusted in dependence upon the flight altitude, flying speed and flying weight, **characterised in that** an adjustment of the final control elements is carried out, in climbing flight, until the cruising altitude of the aircraft is reached or, in descending flight, until the aircraft lands, in such a way that a change in the wing-lift distribution in the direction of span takes place, and the resulting total gust load is diminished by reduction of the 1g base load.

2. Method according to claim 1, **characterised in that** the 1g lift distribution is optimised, and the additional aerodynamic resistance minimised, by controlling the deflections of the final control elements during climbing or descending flight.

3. Method according to claim 1 or 2, **characterised in that** an active system for changing the wing-lift distribution is provided as the final control element.

4. Method according to claim 1, 2 or 3, **characterised in that** ailerons are deflected symmetrically upwards and/or flaps disposed on the inner wings are deflected downwards, for the purpose of adjusting the final control elements.

5. Method according to claim 1 or 2, **characterised in that** a passive system for changing the wing-lift distribution is provided as the final control element.

6. Method according to claim 1, 2, 3, 4 or 5, **characterised by** its use for adaptive wings.

7. Method according to claim 1, 2, 3, 4 or 5, **characterised by** its use for wings having a variable camber.

## Revendications

1. Procédé pour la réduction des charges sur un aéronef à cause des rafales, des organes de réglage, et plus particulièrement des ailerons, des clapets sur les ailes internes, etc. réduisant par réglage les charges dues aux rafales, la totalité de la charge due aux rafales résultant de la somme de la charge de base 1g et de la charge supplémentaire engendrée par une rafale, les organes de réglage étant réglés en fonction de l'altitude de vol, de la vitesse de vol et du poids en vol, et **caractérisé en ce que** les organes de réglage sont réglés pendant le vol ascensionnel jusqu'à ce que l'altitude de vol de l'avion soit atteinte ou pendant l'atterrissage jusqu'à l'atterrissage de l'avion, de telle sorte que la distribution de la portance de l'aile dans la direction de l'écartement soit modifiée et de telle sorte que la charge totale due aux rafales soit réduite par réduction de la charge de base 1g.

2. Procédé selon la revendication 1, **caractérisé en ce que** la distribution de la portance 1g est optimalisée et la résistance additionnelle aérodynamique minimisée pendant le vol ascensionnel ou l'atterrissage par une commande des déviations des organes de réglage.

3. Procédé selon la revendication 1 ou 2, **caractérisé en ce qu'**un système actif de modification de la portance de l'aile a été prévu comme organe de réglage.

4. Procédé selon la revendication 1, 2 ou 3, **caractérisé en ce que**, pour régler les organes de réglage, des ailerons sont déviés symétriquement vers le haut et/ou des clapets disposés contre les ailes intérieures sont déviés vers le bas.

5. Procédé selon la revendication 1 ou 2, **caractérisé en ce que** un système passif de modification de la distribution de la portance de l'aile a été prévu comme organe de réglage.

6. Procédé selon la revendication 1, 2, 3, 4 ou 5, **caractérisé par** une application pour aile adaptatrice.

7. Procédé selon la revendication 1, 2, 3, 4 ou 5, **caractérisé par** une application pour ailes à bombement variable.